Europäisches Patentamt

European Patent Office

Office européen des brevets

(11) Veröffentlichungsnummer: **0 276 699**

**A2**

(12) **EUROPÄISCHE PATENTANMELDUNG**

(21) Anmeldenummer: **88100495.6**

(22) Anmeldetag: **15.01.88**

(51) Int. Cl.⁴: **G01G 21/24** , **G01G 3/14** , **G01L 1/22**

(30) Priorität: **27.01.87 DE 3702271**

(43) Veröffentlichungstag der Anmeldung:
**03.08.88 Patentblatt 88/31**

(84) Benannte Vertragsstaaten:
**DE ES FR GB**

(71) Anmelder: **Bizerba-Werke Wilhelm Kraut GmbH & Co. KG.**
**Wilhelm-Kraut-Strasse 41**
**D-7460 Balingen 1(DE)**

(72) Erfinder: **Jetter, Hans**
**Sonnenbergstrasse 54**
**D-7460 Balingen-Engstlatt(DE)**

(74) Vertreter: **Hoeger, Stellrecht & Partner**
**Uhlandstrasse 14c**
**D-7000 Stuttgart 1(DE)**

(54) **Biegekraftaufnehmer, insbesondere für Waagen.**

(57) Ein Biegekraftaufnehmer, insbesondere für Waagen, umfaßt zwei Parallelogrammlenker, die durch eine belastungsabhängige Biegekraft beaufschlagbar sind, an den Lenkern angeordnete Dehnungsmeßstreifen, die zur Lieferung belastungsabhängiger Meßsignale zu einer elektrischen Brückenschaltung verbunden sind, sowie eine am Biegekraftaufnehmer angeordnete Lastplatte zur Aufbringung der zu messenden Belastung. An einem der Parallelogrammlenker ist wenigstens eine Durchbrechung ausgebildet. Alle Dehnungsmeßstreifen der Brückenschaltung sind möglichst nahe an dieser Durchbrechung ausschließlich auf der Außenseite des die Durchbrechung aufweisenden Lenkers aufgebracht.

*FIG. 1*

## Biegekraftaufnehmer, insbesondere für Waagen

Die Erfindung betrifft einen Biegekraftaufnehmer, insbesondere für Waagen mit zwei Parallelogrammlenkern, die durch eine belastungsabhängige Biegekraft beaufschlagbar sind, mit diesen Lenkern angeordneten Dehnungsmeßstreifen, die zur Lieferung belastungsabhängiger Meßsignale zu einer elektrischen Brückenschaltung verbunden sind, und mit einer am Biegekraftaufnehmer angeordneten Lastplatte zum Aufbringen der zu messenden Belastung.

Bei bekannten Biegekraftaufnehmern dieser Art (DE-PS 12 06 622), die in sich sowohl die Funktion eines rückstellenden Federelementes als auch die einer mechanischen Parallelführung vereinigen, kann beim Einsatz als sogenannte Wägezelle in einer Waage die Lastplatte direkt oder über einen Rückkragram mit dem Biegekraftaufnehmer verbunden werden. Dabei wäre es aus Fertigungsgründen an sich erstrebenswert, die Dehnungsmeßstreifen nur auf der Außenseite eines der beiden Parallelogrammlenker anzuordnen. Ohne zusätzliche konstruktive Maßnahmen ergeben sich dabei jedoch Linearitätsfehler, welche das Meßergebnis vefälschen.

Ein Biegekraftaufnehmer der in Rede stehenden Art wirkt prinzipiell wie eine Parallelogrammführung und besteht aus zwei die beiden Parallelogrammlenker bildenden Biegestäben, die an ihren Enden durch starre Endstücke miteinander verbunden sind, wobei der Biegekraftaufnehmer auch einstückig aus einem einzigen Materialblock herausgearbeitet sein kann. Je nach Anordnung der Lastplatte am Biegekraftaufnehmer - sei es durch direkte Befestigung an dem Kraftaufnehmer oder unter Zwischenschaltung eines Rückkragrams - oder auch in Abhängigkeit von der örtlichen Aufbringung einer Last auf die Lastplatte liegt die Wirkungslinie der durch die Belastung verursachten Kraft im allgemeinen nicht in der Mitte der beiden Parallelogrammlenker. Der in jedem dieser Lenker durch die belastende Kraft erzeugte Spannungszustand ist deshalb bezüglich der Mitte der als Biegestäbe wirkenden Lenker nicht symmetrisch, so daß bei einer Anordnung von vier Dehnungsmeßstreifen an nur einem Lenker eine in unerwünschter Weise unlineare Brückenspannung entstehen würde.

Es ist bereits bekannt, den durch diese Unsymmetrie der Krafteinleitung bedingten Linearitätsfehler dadurch zu vermeiden, daß man von den vier Dehnungsmeßstreifen je zwei zu einer Halbbrücke zusammenschaltet und auf jedem Parallelogrammlinker eine dieser Halbbrücken aufbringt. Hierdurch kann an sich zwar erreicht werden, daß die Dehnungsmeßstreifen jeder Halbbrücke für sich symmetrischen Spannungen ausgesetzt sind, und das Ausgangssignal der aus den beiden Halbbrücken bestehenden Vollbrücke nicht mit einem Linearitätsfehler behaltet ist, jedoch ist die Anordnung von jeweils zwei Dehnungsmeßstreifen auf jedem Parallelogrammlenker fertigungstechnisch aufwendig.

Es ist ferner bekannt (EP-OS 153 121), zur Linearisierung der hier betrachteten Biegekraftaufnehmer die Parallelogrammführung nicht aus zwei, sondern aus drei parallelen Biegebalken aufzubauen. Hierdurch erreicht man zwar, daß auch bei außermittiger Belastung der Spannungszustand im mittleren Biegebalken symmetrisch ist und eine dort angeordnete Vollbrückenschaltung ein lineares Verhalten zeigt, jedoch ist bei einer solchen Ausbildung des Biegekraftaufnehmers ebenfalls ein erhöhter Fertigungsaufwand erforderlich, insbesondere wegen der schlechteren Zugänglichkeit bezüglich Applizierung und Verdrahtung.

Bei dem zuerst erwähnten Fall einer Anordnung der Dehnungsmeßstreifen auf den beiden Parallelogrammlenkern besteht außerdem noch der Nachteil eines höheren Verdrahtungsaufwandes, weil Verdrahtungen zu beiden Parallelogrammlenkern ausgebildet werden müssen.

Der Erfindung liegt die Aufgabe zugrunde, einen gattungsgemäßen Biegekraftaufnehmer so auszubilden, daß seine Dehnungsmeßstreifen nur an einem der Parallelogrammlenker angeordnet sind und dennoch keine unzulässigen Linearitätsfehler auftreten.

Die Aufgabe wird erfindungsgemäß dadurch gelöst, daß an einem der Parallelogrammlenker wenigstens eine Durchbrechung ausgebildet ist, und alle Dehnungsmeßstreifen der Brückenschaltung möglichst nahe an dieser Durchbrechung nur auf der Außenseite des die Durchbrechung aufweisenden Lenkers aufgebracht sind.

Durch die erwähnte Durchbrechung wird gegenüber einem als massive Platte ausgebildeten Biegebalken die Spannungsverteilung im Parallelogrammlener so verändert, daß bei einer Anordnung der Dehnungsmeßstreifen in der Nähe der Durchbrechung symmetrische Verhältnisse und daher wesentliche Linearitätsfehlker vermieden werden.

Die nachstehende Beschreibung bevorzugter Ausführungsformen der Erfindung dient im Zusammenhang mit beiliegender Zeichnung der weiteren Erläuterung. Es zeigen:

Fig. 1 eine teilweise aufgebrochene Seitenansicht eines als Parallelogrammführung ausgebildeten Biegekraftaufnehmers mit Lastplatte;

Fig. 2 eine Teildraufsicht des Biegekraftaufnehmers aus Fig. 1;

Fig. 3 und 4 Ansichten ähnlich Fig. 2 anderer Ausführungsformen von Biegekraftaufnehmern.

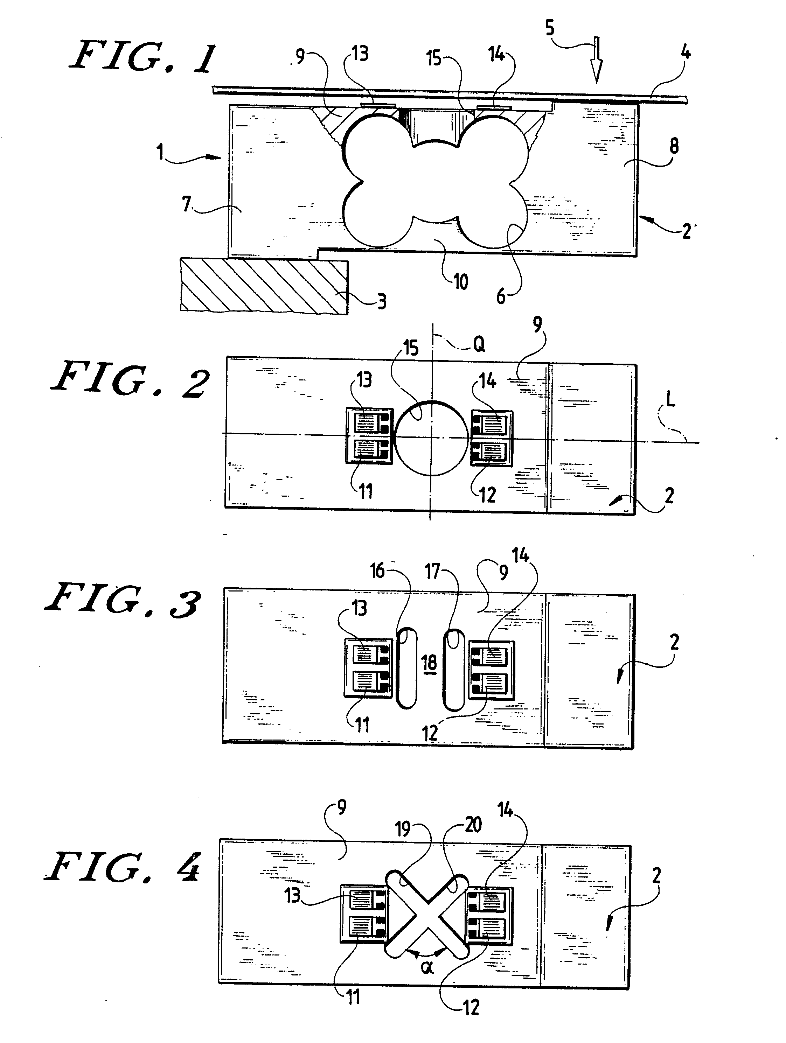

Der in Fig. 1 und 2 dargestellte Biegekraftaufnehmer 1 umfaßt einen massiven Materialblock 2, beispielsweise aus Metall, der links unten mit einer ortsfesten Unterlage, beispielsweise einem Waagengestell 3 fest verbunden und rechts oben eine direkt mit ihm verbundene Lastplatte 4 trägt, die sich horizontal über die Oberseite des Blocks 2 erstreckt. Durch den Pfeil 5 ist die Wirkungslinie einer Kraft repräsentiert, die einer auf die Lastplatte 4 aufgelegten Last entspricht. Parallel zu der in einer Horizontalebene verlaufenden Lastplatte 4 weist der Materialblock 2 eine durchgehende Aussparung 6 auf, die in der aus Fig. 1 ersichtlichen Weise aus insgesamt fünf durchgehenden Einzelbohrungen gebildet ist.

Durch die Aussparung 6 wird der Block 2 in zwei massive Endstücke 7, 8 unterteilt, die durch verhältnismäßig dünne "Parallelogrammlenker" 9, 10 gelenkig miteinander verbunden sind, so daß das Endstück 8 bei Belastung sich parallel zum Endstück 7 bewegen kann, wobei die Parallelogrammlenker 9, 10 entsprechend verbogen werden.

Die lastabhängigen Biegekräfte werden auf insgesamt vier Dehnungsmeßstreifen 11, 12, 13 und 14 übertragen, welche durch entsprechende (nicht dargestellte) Verdrahtungen in bekannter Weise zu einer Brückenschaltung miteinander verbunden sind. Wie dargestellt, sind diese Dehnungsmeßstreifen ausschließlich auf der außenliegenden Oberseite des Biegekraftaufnehmers 1 angeordnet; sie können infolgedessen ohne nennenswerten Fertigungsmehraufwand appliziert werden.

Zwischen den vier Dehnungsmeßstreifen 11, 12, 13, 14 weist der diese Dehnungsmeßstreifen tragende Parallelogrammlenker 9 eine bis zur Aussparung 6 durchlaufende Durchbrechung 15 in Gestalt einer Bohrung auf. Die Dehnungsmeßstreifen 11, 12, 13 und 14 liegen möglichst dicht am Rand dieser Durchbrechung 15. Es wurde gefunden, daß aufgrund dieser Durchbrechung 15 bei Belastung des Biegekraftaufnehmers 1 im Parallelogrammlenker 9 unabhängig von der Anordnung der zu messenden Last auf der Lastplatte 4 die vier Dehnungsstreifen nur solchen Biegespannungen ausgesetzt sind, daß die Linearitätsfehler innerhalb der zulässigen Fehlergrenzen liegen. Es ist also bei Vorhandensein dieser Durchbrechung 15 möglich, alle Dehnungsmeßstreifen 11, 12, 13, 14 auf der Außenseite des in Fig. 1 oberen Parallelogrammlenkers 9 anzuordnen. Die Dehnungsmeßstreifen können beispielsweise vorher verdrahtet und in eine Folie eingeschlossen sein, die dann in einem verhältmäßig einfachen Arbeitsgang auf dem Parallelogrammlenker 9 befestigt wird.

In Fig. 2 trägt die Längsachse des Parallelogrammlenkers 9 das Bezuszeichen L, während die Querachse mit dem Bezugszeichen Q versehen ist. Die gesamte, aus den Dehnungsmeßstreifen 11, 12, 13, 14 und der Durchbrechung 15 bestehende Anordnung ist in der Mitte des Parallelogrammlenkers 9 und symmetrisch zum Mittelpunkt des Lenkers angeordnet, wobei der Mittelpunkt durch den Schnittpunkt der Achsen L und Q vorgegeben ist.

Bei der Ausführungsform gemäß Fig. 1 und 2 sind die Dehnungsmeßstreifen 11, 12, 13, 14 und die Durchbrechung 15 an der Oberseite des oberen Parallelogrammlenkers 9 angeordnet. Eine entsprechende Anordnung ausschließlich auf der Unterseite des unteren Parallelogrammlenkers 10 ist ebenfalls möglich.

Wie weiterhin aus Fig. 1 hervorgeht, sind die Dehnungsmeßstreifen 11, 12 (und entsprechend 13, 14) an den Gelenkstellen der Parallelogrammlenker 9, 10 angeordnet, also dort, wo aufgrund der Aussparung 6 der Materialblock 2 am dünnsten ist. An diesen Verbindungs-oder Gelenkstellen treten die größten Verbiegungen auf.

Bei der Ausführungsform gemäß Fig. 3 sind statt der einzigen kreisrunden Durchbrechung 15 (Fig. 2) zwei den Parallelogrammlenker 9 durchdringende Durchbrechungen 16, 17 in Gestalt zweier Langlöcher vorgesehen, zwischen denen ein massiver Materialsteg 18 liegt. Diese Ausbildung hat den Vorteil, daß auf dem Steg 18 für die Schaltung erforderlich (nicht dargestellte) Kontaktier elemente oder Ableich-un Kompensationswiderstände für die Brückenschaltung angeordnet werden können. Die Langlöcher 16, 17 sind parallel zueinander.

Bei der Ausführungsform gemäß Fig. 4 sind als Durchbrechung zwei sich kreuzende Langlöcher 19, 20 zwischen den Dehnungsmeßstreifen 11, 12, 13 und 14 vorgesehen, wobei der Kreuzungswinkel $\alpha$ zwischen den Langlöchern 19, 20 zwischen etwa 60 bis 90° betragen kann.

Auch im Falle der Durchbrechungsanordnung gemäß Fig. 3 und 4 ergeben sich mit Bezug auf die Biegespannungsverteilung ähnlich günstige Wirkungen wie bei der Ausführungsform gemäß Fig. 2.

Bei der dargestellten Ausführungsform sind jeweils insgesamt vier Dehnungsmeßstreifen vorgesehen. Bei anderen Ausführungsformen kann es auch genügen, lediglich zwei solcher Dehnungsmeßstreifen auf dem einen mit der Durchbrechung versehenen Parallelogrammlenker anzuordnen. In diesem Falle müssen bei der elektrischen Brückenschaltung dann die beiden anderen Dehnungsmeßstreifen durch elektrische Widerstände ersetzt werden.

## Ansprüche

Biegekraftaufnehmer, insbesondere für Waagen mit zwei Parallelogrammlenkern, die durch eine belastungsabhängige Biegekraft beaufschlagbar sind, mit an diesen Lenkern angeordneten Dehnungsmeßstreifen, die zur Lieferung belastungsabhängiger Meßsignale zu einer elektrischen Brückenschaltung verbunden sind, und mit einer am Biegekraftaufnehmer angeordneten Lastplatte zum Aufbringen der zu messenden Belastung, **dadurch gekennzeichnet,** daß an einem der Parallelogrammlenker (9, 10) wenigstens eine Durchbrechung (9; 16, 17; 19, 20) ausgebildet ist, und alle Dehnungsmeßstreifen (11, 12, 13, 14) der Brückenschaltung möglichst nahe an dieser Durchbrechung nur auf der Außenseite des die Durchbrechung aufweisenden Lenkers aufgebracht sind.

2. Biegekraftaufnehmer nach Anspruch 1, dadurch gekennzeichnet, daß die Durchbrechung (15) kreisrund ist.

3. Biegekraftaufnehmer nach Anspruch 1, dadurch gekennzeichnet, daß als Durchbrechung zwei quer zur Längsachse (L) des Lenkers (9, 10) verlaufende Langlöcher (16, 17) vorgesehen sind.

4. Biegekraftaufnehmer nach Anspruch 1, dadurch gekennzeichnet, daß als Durchbrechung zwei sich unter einem Winkel $\alpha$ von 60 bis 90° kreuzende Langlöcher (19, 20) vorgesehen sind.

5. Biegekraftaufnehmer nach Anspruch 1, dadurch gekennzeichnet, daß die Dehnungsmeßstreifen (11, 12, 13, 14) symmetrisch an der Durchbrechung (15) angeordnet sind.

6. Biegekraftaufnehmer nach Anspruch 5, dadurch gekennzeichnet, daß die Dehnungsmeßstreifen (11, 12, 13, 14) über den Gelenkstellen der Parallelogrammlenker (9, 10) angeordnet sind.

7. Biegekraftaufnehmer nach Anspruch 1, dadurch gekennzeichnet, daß er einen Grundkörper mit zwei Endstücken (7, 8), zwei Parallelogrammlenkern (9, 10) und einer die Parallelogrammlenker und Endstücke voneinander trennenden Aussparung (6) umfaßt und einstückig aus einem einzigen Materialblock (2) gefertigt ist.

FIG. 1

FIG. 2

FIG. 3

FIG. 4